(19) Europäisches Patentamt / European Patent Office / Office européen des brevets

(11) **EP 2 881 706 B1**

(12) **EUROPÄISCHE PATENTSCHRIFT**

(45) Veröffentlichungstag und Bekanntmachung des Hinweises auf die Patenterteilung:
**26.10.2016 Patentblatt 2016/43**

(51) Int Cl.:
**G01C 13/00** (2006.01)      **G01S 17/88** (2006.01)

(21) Anmeldenummer: **14190506.7**

(22) Anmeldetag: **27.10.2014**

(54) **Verfahren zur Vermessung von Gewässern**

Method for measuring bodies of water

Procédé de mesure d'eaux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2013 AT 508032013**

(43) Veröffentlichungstag der Anmeldung:
**10.06.2015 Patentblatt 2015/24**

(73) Patentinhaber: **Riegl Laser Measurement Systems GmbH**
**3580 Horn (AT)**

(72) Erfinder:
• **Schwarz, Roland**
**1140 Wien (AT)**
• **Ullrich, Andreas**
**3003 Gablitz (AT)**
• **Pfennigbauer, Martin**
**3430 Tulln (AT)**

(74) Vertreter: **Weiser, Andreas**
**Patentanwalt**
**Kopfgasse 7**
**1130 Wien (AT)**

(56) Entgegenhaltungen:
**US-A1- 2011 271 752**

• **WONG H ET AL: "CHARACTERIZATION AND DECOMPOSITION OF WAVEFORMS FOR LARSEN 500 AIRBORNE SYSTEM", IEEE TRANSACTIONS ON GEOSCIENCE AND REMOTE SENSING, IEEE SERVICE CENTER, PISCATAWAY, NJ, US, Bd. 29, Nr. 6, November 1991 (1991-11), Seiten 912-921, XP000273383, ISSN: 0196-2892, DOI: 10.1109/36.101370**

EP 2 881 706 B1

**Beschreibung**

Die vorliegende Erfindung betrifft ein Verfahren zur Messung der Entfernung von einem Messort zu einer Oberfläche eines Wasservolumens, insbesondere mittels Laserentfernungsmessung.

Für die genaue Vermessung von Gewässern mittels Laserentfernungsmessung, die sog. Laser-Hydrographie mit Fokus auf die Tiefenbestimmung, ist auch eine genaue Vermessung der Wasseroberfläche erforderlich. Aus einer Vielzahl von Entfernungsmesspunkten der Wasseroberfläche wird ein Punkte- bzw. Netzmodell der Wasseroberfläche gebildet, um am jeweiligen Eintrittspunkt eines den Gewässerboden vermessenden Laserstrahls die durch Wellenbewegungen bedingte lokale Neigung der Wasseroberfläche zu bestimmen. Aus der lokalen Neigung und der bekannten Richtung des Lasermessstrahls kann der lokale Eintrittswinkel und damit Brechungswinkel des Lasermessstrahls an der Gewässeroberfläche ermittelt werden, wodurch der jeweilige Vermessungspunkt des Gewässerbodens um diesen Brechungswinkel und die unterschiedliche Ausbreitungsgeschwindigkeit in Wasser kompensiert werden kann, um ein hochgenaues Punkte- bzw. Netzmodell des Gewässerbodens zu erstellen. Ein derartiges Verfahren ist beispielsweise in Tulldahl M., Andersson M., Steinvall O., "Airborne Laser Depth Sounding: Improvements in Position- and Depth Estimates by Local Corrections for Sea Surface Slope", OCEANS 2000 MTS/IEEE Conference and Exhibition, Band 2, Seiten 1421 - 1428 (mit weiteren Literaturnachweisen) beschrieben.

Eine hochgenaue Entfernungsmessung an einer Gewässeroberfläche mittels Laserimpuls-Laufzeitmessung wirft jedoch zusätzliche Probleme auf, weil ein Laserimpuls nicht nur von der Oberfläche, sondern auch - exponentiell abnehmend - von allen darunterliegenden Wasserschichten reflektiert wird.

Ein Verfahren zur Messung einer Entfernung zwischen einem Gewässerboden und einer Gewässeroberfläche mittels Laserentfernungsmessung ist beispielsweise aus Wong H. and Antoniou A., "Characterization and Decomposition of Waveforms for LARSEN 500 Airborne System", IEEE Transactions on Geoscience and Remote Sensing, Band 29, Nr. 6, November 1991, Seiten 912-921 bekannt.

Das Reflexionsvermögen einer Wasseroberfläche und der darunterliegenden, vom Lasermessstrahl durchquerten "Säule" des Wasservolumens kann für eine ideal-impulsförmige (Dirac-impulsförmige) Anregung mit der folgenden Impulsanwort modelliert werden:

$$T(t) = s_s \delta(t - t_1) + s_v e^{-a(t-t_1)} \sigma(t - t_1) \qquad (1)$$

mit $t_1$ Empfangszeitpunkt des von der Wasseroberfläche reflektierten Lichtimpulses im Empfänger,
$s_s$ Reflexionsvermögen der Wasseroberfläche,
$s_v$ Reflexionsvermögen des Wasservolumens,
a Absorptionsvermögen des Wasservolumens,

wobei $\delta(t)$ die Dirac-Funktion und $\delta(t)$ die Stufenfunktion bezeichnet.

Wenn auch die Gewässerbodenreflexion mitmodelliert werden soll, hat die Impulsantwort $T(t)$ zusätzlich den additiven Term

$$-s_v e^{-a(t-t_2)} \sigma(t - t_2) + s_g \delta(t - t_2) \qquad (2)$$

mit $t_2$ Empfangszeitpunkt des von einem Boden des Wasservolumens reflektierten Lichtimpulses,
$s_g$ Reflexionsvermögen des Bodens.

Der zeitliche Verlauf eines von diesem Wassermodell aus Wasseroberfläche, Wasservolumen und (optional) Wasserboden reflektierten Lichtimpulses (Echoimpulses) $P_R(t)$ ergibt sich damit aus einer Faltung des ausgesendeten Impuls $P_s(t)$ mit der Gewässermodell-Impulsantwort $T(t)$ zu

$$P_R(t) = P_S(t) * T(t) \qquad (3)$$

wobei "*" den Faltungsoperator bezeichnet.

Um nun mittels Impulslaufzeitmessung die genaue Entfernung zur Wasseroberfläche zu messen, könnte die Gleichung (3) in Kenntnis des Verlaufs des Sendeimpulses $P_s(t)$ und der Reflexionsvermögen $s_s$, $s_v$, $s_g$ und des Absorptionsvermögen a und durch Messung des Verlaufs des Empfangsimpulses $P_R(t)$ für die Unbekannte $t_1$ gelöst werden, um aus der Laufzeit $t_1 - t_0$ des Sendeimpulses die Entfernung zu bestimmen.

Einmal abgesehen von dem Umstand, dass die Parameter $s_s$, $s_v$, $s_g$ und a des Gewässers nur ungefähr geschätzt werden können, da sie vom lokalen Salzgehalt, Schwebstoffen, Schaumbildung usw. des Wassers abhängen, ist die Lösung der Gleichung (3) in der Praxis nicht-trivial, da sie eine Rück-Faltungsoperation erfordert, welche selbst für moderne Prozessoren mit hoher Rechenleistung sehr zeitaufwendig und überdies sehr fehleranfällig bei verrauschten Signalen ist. Für einen Echtzeit-Messbetrieb, in dem ein Laserscanner beispielsweise Tausende von Messpunkten der Gewässeroberfläche und des Gewässerbodens pro Sekunde erstellt, sind die derzeit bekannten Verfahren zur Vermessung einer Gewässeroberfläche, welche imstande sind, die Impulsantwort des Wasservolumens korrekt zu berücksichtigen, nicht einsetzbar.

Die Erfindung setzt sich zum Ziel, diese Nachteile zu überwinden und ein verbessertes Verfahren zur Entfernungsmessung einer Wasseroberfläche zu schaffen, das auch für einen Echtzeitbetrieb in hochmodernen, schnellen Laserscannern geeignet ist.

Dieses Ziel wird mit einem Verfahren der einleitend genannten Art erreicht, umfassend:

Aussenden eines Lichtimpulses $P_S$ mit einem zeitlichen Verlauf $P_S(t)$, der am Ausgang eines ohne Reflexion am Wasservolumen angestrahlten Empfängers einen Direktempfangsimpuls $P_{R,d}$ mit dem zeitlichen Verlauf

$$P_{R,d}\left(t\right) = \sum_{k=1}^{p} \sigma(t-t_0)c_k e^{b_k t} \qquad (4)$$

mit $b_k$, $c_k$ Parameter der *k-ten* Exponentialfunktion von *p* Exponentialfunktionen,
hervorruft, vom Messort aus zu einem Sendezeitpunkt $t_0$ auf die Wasseroberfläche;
Empfangen eines reflektierten Lichtimpulses am Messort in einem Empfänger und Aufzeichnen des zeitlichen Verlaufs $P_R(t)$ des Empfängerausgangssignals;
Optimieren der Parameter $s_s$, $s_v$, a und $t_1$ eines Empfangsimpulsmodells $P_{R,mod}(t)$ der Gleichung

$$P_{R,\mathrm{mod}}\left(t\right) = s_s \sum_{k=1}^{p} c_k e^{b_k(t-t_1)} + s_v \sum_{k=1}^{p} \frac{c_k}{a+b_k}\left(e^{b_k(t-t_1)} - e^{-a(t-t_1)}\right) \qquad (5)$$

mit $t_1$ Empfangszeitpunkt des von der Wasseroberfläche reflektierten Lichtimpulses im Empfänger,
$s_s$ Reflexionsvermögen der Wasseroberfläche,
$s_v$ Reflexionsvermögen des Wasservolumens,
a Absorptionsvermögen des Wasservolumens,

bis die Abweichung zwischen Empfangsimpulsmodell $P_{R,mod}(t)$ und aufgezeichnetem Verlauf $P_R(t)$ minimal ist; und
Bestimmen der Entfernung vom Messort zur Wasseroberfläche aus dem optimierten Parameter $t_1$ und dem Sendezeitpunkt $t_0$.

Gemäß der Erfindung werden somit spezielle Sendeimpulse $P_s(t)$ verwendet, deren "direkte" Empfänger-Ausgangsimpulse $P_{R,d}(t)$, wenn sie also nicht an einem Wasservolumen reflektiert werden, auch "Direktempfangsimpulse" genannt, durch eine Summe von Exponentialfunktionen modelliert bzw. modellierbar sind, wodurch sich die Rückfaltung von Gleichung (3) auf das Lösen des Empfangsimpulsmodells von Gleichung (5) vereinfacht, das nur mehr aus einer - eine entsprechende Wahl von p vorausgesetzt - relativ geringen Anzahl von Exponentialfunktionen besteht. Die Anpassung des Empfangsimpulsmodells an den Empfangsimpuls, d.h. die Minimierung der Differenz $P_R(t)$ - $P_{R,mod}(t)$, kann dann mit einer überschaubaren Anzahl von Iterationsschritten z.B. nach einem Gradientenverfahren durchgeführt werden, um den gesuchten Parameter $t_1$ und damit eine genaue, die Rückstreuung der Wassersäule berücksichtigende Entfernung zur Wasseroberfläche zu bestimmen. Das Verfahren der Erfindung erfordert eine wesentlich geringere Rechenleistung als die bekannten Verfahren und ist damit auch für einen Echtzeitbetrieb z.B. in Hochgeschwindigkeits-Laserscannern, welche eine Vielzahl von Messpunkten der Gewässeroberfläche und des Gewässerbodens in rascher Abfolge erstellen, geeignet.

Der Sendeimpuls $P_s(t)$ kann zur Erreichung von Gleichung (4) mit dem dazu erforderlichen zeitlichen Verlauf synthetisiert werden, z.B. durch entsprechende zeitliche Intensitätssteuerung einer Licht- bzw. Laserquelle. Gemäß einer besonders vorteilhaften Ausführungsform der Erfindung wird der umgekehrte Weg beschritten und ein real im Sende- und Empfangssystem eines Laserentfernungsmessers bzw. -scanners auftretender Lichtimpuls, wenn dieser keine Gewässerreflexion erfährt, als Direktempfangsimpuls aufgezeichnet; der aufgezeichnete Direktempfangsimpuls wird dann durch die Summe von Exponentialfunktionen gemäß Gleichung (4) approximiert.

Zu diesem Zweck umfasst eine bevorzugte Ausführungsform der Erfindung in einer Vor- bzw. Kalibrierungsphase, d.h. noch vor den genannten Schritten, die folgenden Schritte:

Senden eines Lichtimpulses $P_S$ vom Messort ohne Reflexion am Wasservolumen zum Empfänger und Aufzeichnen des zeitlichen Verlaufs $P_{R,d}(t)$ des dort am Empfängerausgang auftretenden Direktempfangsimpulses $P_{R,d}$; und Optimieren der Parameter $b_k$ und $c_k$ eines Direktempfangsimpulsmodells

$$P_{R,d,\mathrm{mod}}(t) = \sum_{k=1}^{p} \sigma(t) c_k e^{b_k t} \, , \qquad\qquad (6)$$

bis die Abweichung zwischen Direktempfangsimpulsmodell $P_{R,d,mod}(t)$ und aufgezeichnetem Verlauf $P_{R,d}(t)$ minimal ist.

Die optimalen Parameter $b_k$ und $c_k$ des derart modellierten Direktempfangsimpuls $P_{R,d}(t)$ können beispielsweise bereits bei der Fertigung und Kalibrierung eines Laserentfernungsmessers oder -scanners, in welchem das erfindungsgemäße Verfahren implementiert ist, in der genannten Weise ermittelt und darin eingespeichert werden, sodass sie im Betrieb des Laserentfernungsmessers oder -scanners für die Optimierung des Empfangsimpulsmodells $P_{R,mod}(t)$ jedes Messpunkts zur Verfügung stehen.

Wenn das Direktempfangsimpulsmodell $P_{R,d,mod}(t)$ in der genannten Weise im Sende- und Empfangssystem des Laserentfernungsmessers bzw. -scanners auftretende Impulse nachbildet, können diese so kurz wie möglich gehalten werden, weil ihr Intensitätsverlauf nicht gesteuert werden muss, sondern umgekehrt ihr realer Intensitätsverlauf nachgebildet wird. Durch kürzestmögliche Sendeimpulse können eine bessere Entfernungsauflösung und höhere Messpunktraten erzielt werden.

In der Praxis hat sich gezeigt, dass eine geringe Anzahl von p = 5 - 9, bevorzugt p = 7 Exponentialfunktionen für eine ausreichende Messgenauigkeit genügt, was den Rechenaufwand reduziert.

In jedem Fall ist es besonders günstig, wenn für den Schritt des Optimierens des Empfangsimpulsmodells $P_{R,mod}(t)$ ein Startwert für den Parameter $t_1$ gewählt wird, der aus einem früheren Messwert der Entfernung des Messorts zur Wasseroberfläche bestimmt wird. Der frühere Messwert kann ein "grober" Messwert sein, wie er beispielsweise mit einem herkömmlichen Impulslaufzeit-Messverfahren erzielt wurde.

In gleicher Weise ist es günstig, wenn für den Schritt des Optimierens des Empfangsimpulsmodells $P_{R,mod}(t)$ Startwerte für die Parameter $s_s$, $s_v$ und a entsprechend bekannten Wassereigenschaften gewählt werden. Dies reduziert die Anzahl an erforderlichen Iterationen in den Optimierungsschritten, um die optimalen Parameter und damit den Entfernungsmesswert zu finden.

Für die Optimierungsschritte können alle in der Technik bekannten Optimierungsverfahren eingesetzt werden. Bevorzugt wird das Optimieren mithilfe eines herkömmlichen Gradientenverfahrens durchgeführt, z.B. eines Levenberg-Marquardt-Algorithmus.

Das Verfahren der Erfindung kann zusätzlich zur Ermittlung der Entfernung des Gewässerbodens verwendet werden, indem das Empfangsimpulsmodell $P_{R,mod}(t)$ optional den additiven Term

$$-s_v \sum_{k=1}^{p} \frac{c_k}{a+b_k} \left( e^{b_k(t-t_2)} - e^{-a(t-t_2)} \right) + s_g \sum_{k=1}^{p} c_k e^{b_k(t-t_2)} \qquad\qquad (7)$$

mit $t_2$ Empfangszeitpunkt des von einem Boden des Wasservolumens reflektierten Lichtimpulses,
$s_g$ Reflexionsvermögen des Bodens,

enthält;
indem beim genannten Optimieren des Empfangsimpulsmodells $P_{R,mod}(t)$ zusätzlich die Parameter $s_g$ und $t_2$ optimiert werden; und
indem aus dem optimierten Parameter $t_2$ und dem Sendezeitpunkt $t_0$ die Entfernung des Messorts zum Boden des Wasservolumens gemessen wird.

Bevorzugt wird auch hier für den Schritt des Optimierens des Empfangsimpulsmodells $P_{R,mod}(t)$ ein Startwert für den Parameter $t_2$ gewählt, der aus einem früheren Messwert der Entfernung des Messorts zum Wasserboden bestimmt wird, und/oder für den Schritt des Optimierens des Empfangsimpulsmodells $P_{R,mod}(t)$ ein Startwert für den Parameter $s_g$ entsprechend bekannten Bodeneigenschaften gewählt, um das Verfahren zu beschleunigen und dadurch die Rechenzeit zu minimieren.

Die Erfindung wird nachstehend anhand eines in den beigeschlossenen Zeichnungen dargestellten Ausführungsbeispiels näher erläutert. In den Zeichnungen zeigt

Fig. 1 ein kombiniertes Blockschaltbild und Strahlendiagramm eines Laserentfernungsmessers oder -scanners zur Ausführung des Verfahrens der Erfindung;

Fig. 2 einen Strahlengang des Laserentfernungsmessers bzw. -scanners von Fig. 1 bei einer Gewässervermessung gemäß dem Verfahren der Erfindung; und

die Fig. 3 - 7 Zeitdiagramme von im Zuge des Verfahrens der Erfindung auftretenden Impulsen.

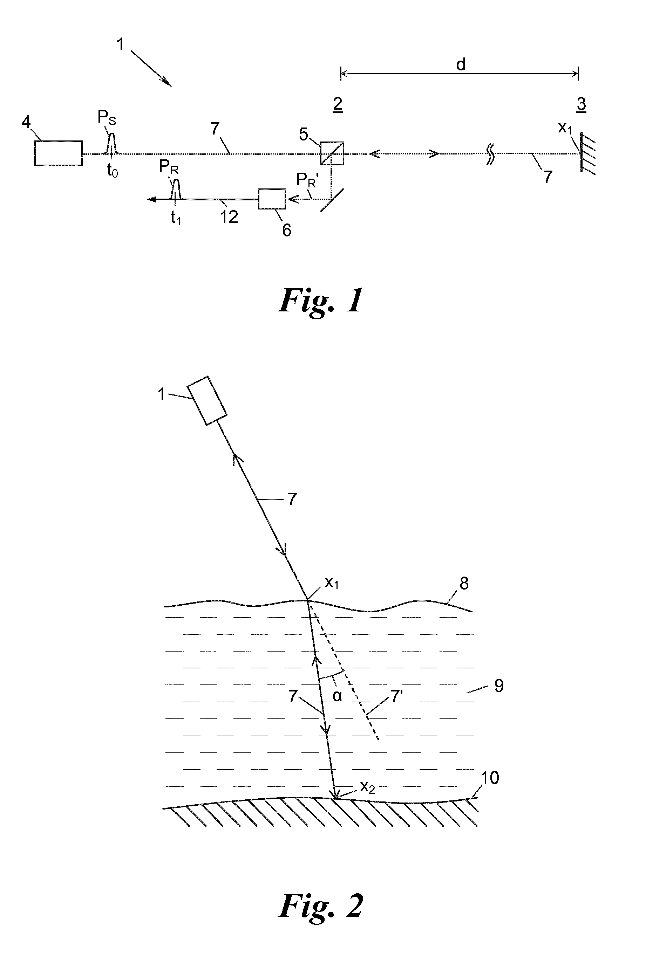

Fig. 1 zeigt das grundlegende Prinzip eines Laserentfernungsmessers oder -scanners 1, der von einem Messort 2 aus die Entfernung d zu einem Ziel 3 durch Messung der Laufzeit von Impulsen P bestimmt. Ein Sendelichtimpuls $P_S$ wird zu einem Zeitpunkt $t_0$ von einem Sender 4 ausgesandt, vom Ziel 3 reflektiert und - z.B. über einen Strahlteiler 5 - in einem Empfänger 6 als Empfangslichtimpuls $P_R'$ empfangen und vom Empfänger 6 in einen elektrischen Empfangsimpuls $P_R$ zu einem Zeitpunkt $t_1$ umgewandelt.

Aus der Laufzeit $t_1 - t_0$ kann anhand der bekannten Beziehung $d = c \cdot (t_1 - t_0)/2$ (mit c = Lichtgeschwindigkeit) die Entfernung d zum Ziel 3 gemessen werden. Der Sender 4 sendet dazu Lichtimpulse $P_S$ in räumlich gebündelter Form, d.h. als Messstrahl 7, in einer Messstrahlrichtung auf einen Messpunkt $x_1$ des Ziels 3 aus; bei einem Laserscanner wird der Messstrahl 7 bewegt, um eine Vielzahl von Messpunkten $x_1$ des Ziels 3 zu vermessen.

Fig. 2 zeigt die Anwendung des Laserentfernungsmessers bzw. -scanners 1 von Fig. 1 zur Vermessung eines (oder mehrerer) Messpunkte $x_1$ der Oberfläche 8 eines Wasservolumens 9, z.B. eines Gewässers (Flusses, Meeres) mit einem Boden 10. Beim Eintritt des Lasermessstrahls 7 in das Wasservolumen 9 erfährt der Messstrahl 7 eine optische Brechung $\alpha$, sodass sein Auftreffort $x_2$ am Gewässerboden 10 nicht mehr in der optischen Achse 7' des Entfernungsmessers bzw. -scanners 1 liegt.

Eine genaue Kenntnis des Eintrittspunktes $x_1$ an der Wasseroberfläche 8 und damit des Brechungswinkels $\alpha$ an der Gewässeroberfläche 8 ist daher auch für die Vermessung und örtliche Zuordnung der Messpunkte $x_2$ des Gewässerbodens 10 erforderlich. Dazu wird aus mehreren um den Messpunkt $x_1$ liegenden Messpunkten der Wasseroberfläche 8 die lokale Neigung der Wasseroberfläche 8 am Eintrittspunkt $x_1$ ermittelt, um daraus den Brechungswinkel $\alpha$ zu ermitteln, wie in *Tulldahl M. et al.,* loc. cit., beschrieben.

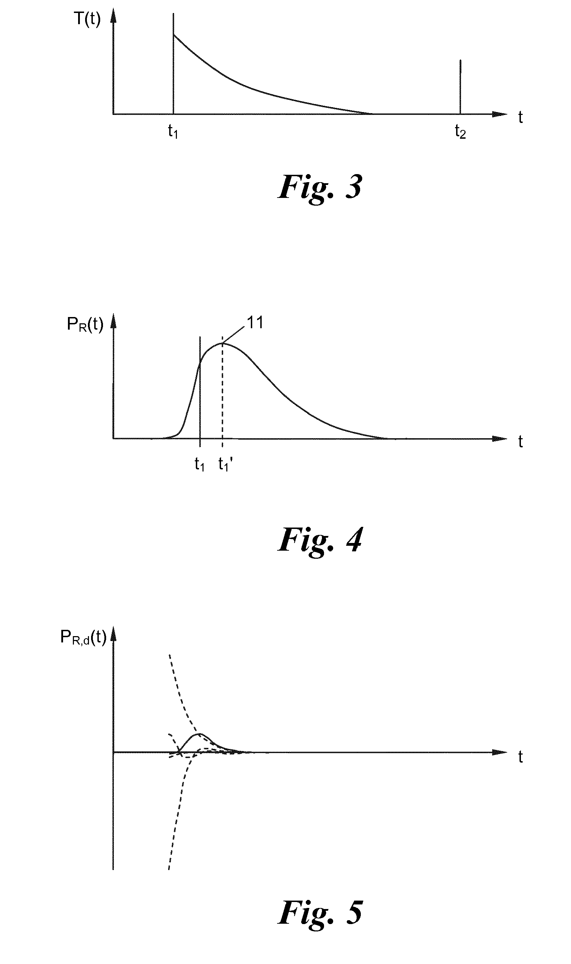

Das Reflexionsverhalten eines Wasservolumens 9 mit einer Oberfläche 8 für einen eintretenden ideal-Dirac-förmigen Lichtimpuls P kann durch die Wasser-Impulsantwort $T_t(t)$ gemäß der Gleichung (1) (bzw. mit Boden 10: durch die Gleichungen (1) und (2)) modelliert werden. Fig. 3 zeigt ein Beispiel einer solchen Wasser-Impulsantwort $T(t)$.

Trifft ein realer, nicht ideal-Dirac-förmiger, d.h. zeitlich ausgedehnter Sendeimpuls $P_s(t)$ auf das Gewässer 8 - 10 auf, ergibt sich der im Empfänger 6 zurückerhaltene, reflektierte Lichtimpuls (Echoimpuls) $P_R(t)$ als Faltung des Sendeimpulses $P_s(t)$ mit der Impulsantwort $T(t)$ gemäß Gleichung (3). Fig. 4 zeigt ein Beispiel eines solchen realen Empfangsimpulses $P_R(t)$.

Wie aus Fig. 4 ersichtlich, verlagert sich durch die Faltung das Ampliduten- bzw. Intensitätsmaximum 11 des Empfangsimpulses $P_R(t)$ etwas in das Wasservolumen 9 hinein, was auch durch die zusätzlichen, exponentiell abklingenden Reflexionen am unter der Wasseroberfläche 8 liegenden Wasservolumen 9 erklärt werden kann. Würde nun beispielsweise das Intensitätsmaximum 11 des Empfangsimpulses $P_R(t)$ als sein Empfangszeitpunkt $t_1'$ detektiert, wäre die Entfernungsmessung zur Wasseroberfläche 8 verfälscht. Das im Folgenden beschriebene Verfahren überwindet dieses Problem.

Dazu werden spezielle Sendeimpulse $P_S$ mit einem solchen zeitlichen Verlauf $P_S(t)$ gewählt, dass der von ihnen bei "direkter" Zuführung zum Empfänger 6, d.h. ohne Reflexion am Wassersystem 6 - 8, am Ausgang 12 des Empfängers 6 auftretende Empfangsimpuls $P_{R,d}$ die hier nochmals wiedergegebene Gleichung (4) erfüllt:

$$P_{R,d}(t) = \sum_{k=1}^{p} \sigma(t - t_0) c_k e^{b_k t} \qquad (4)$$

mit $b_k$, $c_k$ Parameter der *k-ten* Exponentialfunktion von p Exponentialfunktionen,
Der ohne Reflexion am Wassersystem 6 - 8 empfangene elektrische Impuls $P_{R,d}(t)$ am Ausgang 12 des Empfängers 6 wird hier auch "Direktempfangsimpuls" bezeichnet.

Wenn der Sendeimpuls $P_S(t)$ ein Dirac-Impuls ist, entspricht der Direktempfangsimpuls $P_{R,d}(t)$ unmittelbar der Systemantwort $H(t)$ des Empfängers 6 von dessen optischem Eingang zu dessen elektrischem Ausgang 12. Der Direktempfangsimpuls $P_{R,d}(t)$ des Sendeimpuls $P_S(t)$ kann daher auch geschrieben werden als

$$P_{R,d}(t) = P_S(t) * H(t) \qquad (8)$$

Der den gewünschten Direktempfangsimpuls $P_{R,d}(t)$ von Gleichung (4) verursachende Sendeimpuls $P_S(t)$ könnte daher grundsätzlich durch Rückfaltung von Gleichung (8) ermittelt werden.

Fig. 5 zeigt mit ausgezogenen Linien ein Beispiel eines Direktempfangsimpulses $P_{R,d}(t)$ gemäß Gleichung (4), wobei die strichlierten Linien die konstituierenden Exponentialfunktionen $c_k e^{bkt}$ versinnbildlichen. Bevorzugt wird die Anzahl p von Exponentialfunktionen gering gewählt, z.B. 3 - 10, bevorzugt 5 - 9, besonders bevorzugt p = 7. Insbesondere wird eine ungerade Zahl p von Exponentialfunktionen gewählt, wobei der Parameter $b_k$ der "mittleren" Exponentialfunktion reell ist, und die Parameter $b_k$ aller übrigen Exponentialfunktionen jeweils paarweise konjugiert komplex sind.

Die Faltung eines solchen Sendeimpulses $P_S(t)$ mit der Impulsantwort $T(t)$ gemäß Gleichung (3) führt zu

$$P_R(t) = \int_{-\infty}^{\infty} \sum_{k=1}^{p} c_k e^{b_k \tau} \left( s_s \delta(t - t_1 - \tau) + s_v e^{-a(t-t_1-\tau)} \sigma(t - t_1 - \tau) \right) d\tau$$

$$+ \int_{-\infty}^{\infty} \sum_{k=1}^{p} c_k e^{b_k \tau} \left( -s_v e^{-a(t-t_2-\tau)} \sigma(t - t_2 - \tau) + s_g \delta(t - t_2 - \tau) \right) d\tau \qquad (9)$$

Durch Lösen der Faltungsintegrale in Gleichung (9) ergibt sich

$$P_R(t) = s_s \sum_{k=1}^{p} c_k e^{b_k(t-t_1)} + s_v \sum_{k=1}^{p} \frac{c_k}{a+b_k} \left( e^{b_k(t-t_1)} - e^{-a(t-t_1)} \right)$$

$$- s_v \sum_{k=1}^{p} \frac{c_k}{a+b_k} \left( e^{b_k(t-t_2)} - e^{-a(t-t_2)} \right) + s_g \sum_{k=1}^{p} c_k e^{b_k(t-t_2)} \ , \qquad (10)$$

wobei der Ausdruck

$$- s_v \sum_{k=1}^{p} \frac{c_k}{a+b_k} \left( e^{b_k(t-t_2)} - e^{-a(t-t_2)} \right) + s_g \sum_{k=1}^{p} c_k e^{b_k(t-t_2)} \qquad (11)$$

einen optionalen Term für die Berücksichtigung der Bodenreflexion am Ort $x_2$ des Gewässerbodens 10 darstellt, welcher entfallen kann, wenn die Tiefe des Wasservolumens als hinlänglich groß angenommen werden kann, in welchem Fall sich Gleichung (10) reduziert zu

$$P_R(t) = s_s \sum_{k=1}^{p} c_k e^{b_k(t-t_1)} + s_v \sum_{k=1}^{p} \frac{c_k}{a+b_k} \left( e^{b_k(t-t_1)} - e^{-a(t-t_1)} \right) \qquad (12)$$

Der Sendeimpuls $P_S(t)$ gemäß den Gleichungen (4) und (8) sowie Fig. 5 könnte beispielsweise durch entsprechende elektrische Ansteuerung des Senders 4 des Entfernungsmessers bzw. -scanners 1 bewirkt werden. In vorteilhafter Weise wird jedoch der umgekehrte Weg beschritten und der zu einem beliebigen reproduzierbaren Sendeimpuls $P_S(t)$ des Senders 4 am Ausgang des Systems 1 aus Sender 4 und Empfänger 6 auftretende Direktempfangsimpuls $P_{R,d}(t)$ in einer ersten Phase des Verfahrens gemessen und durch eine Exponentialfunktionssumme gemäß Gleichung (4) modelliert. Es versteht sich, dass die Anzahl p an Exponentialfunktionen dabei die Genauigkeit der Modellierung und damit des weiteren Verfahrens bestimmt.

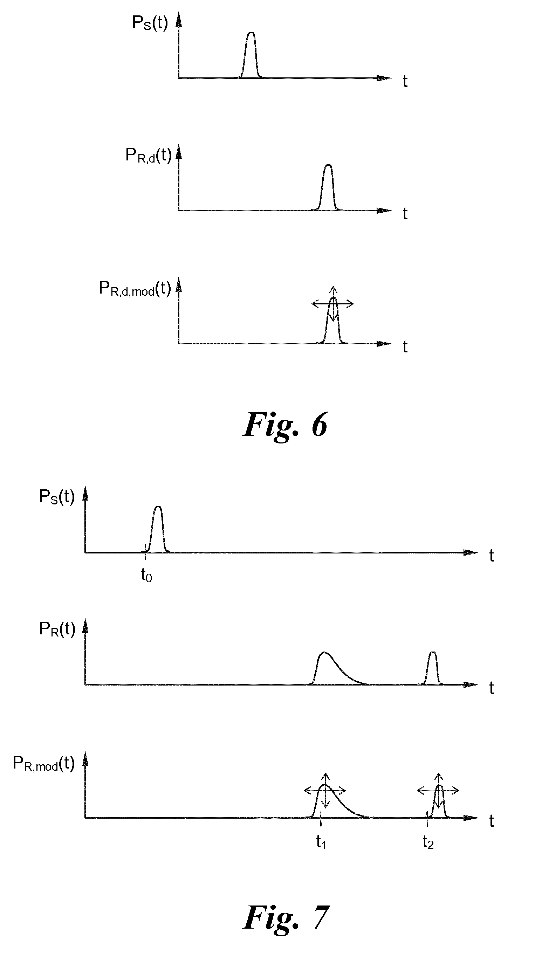

Fig. 6 zeigt eine solche optionale erste Kalibrierungsphase zur Ermittlung der Parameter $b_k$, $c_k$ des Modells für den Direktempfangsimpuls $P_{R,d}(t)$. Dazu wird ein Lichtimpuls $P_S(t)$ von derselben Form, wie sie später auch in der Messphase verwendet wird, vom Sender 4 ausgesandt und ohne zwischenliegendes Wassersystem 8 - 10 dem Empfänger 6 zugeführt, beispielsweise indem der Empfänger 6 in der optischen Achse 7' des Senders 4 angeordnet oder der Messstrahl 7 über einen Spiegel zum Empfänger 6 umgelenkt wird. Der am Ausgang 12 des Empfängers 6 nach der optisch-elektrischen Umwandlung des aufgefangenen optischen Impulses $P_R'(t)$ auftretende Direktempfangsimpuls $P_{R,d}(t)$ wird im nächsten Schritt durch ein Direktempfangsimpulsmodell

$$P_{R,d,\mathrm{mod}}(t) = \sum_{k=1}^{p} \sigma(t) c_k e^{b_k t} \qquad (6)$$

approximiert, und zwar durch Variieren der Parameter $b_k$ und $c_k$ des Modells, bis die Abweichung zwischen Direktempfangsimpulsmodell $P_{R,d,mod}(t)$ und tatsächlich empfangenem Direktempfangsimpuls $P_{R,d}(t)$ minimal ist. Hiefür kann wieder ein Minimierungsverfahren, z.B. ein Gradientenverfahren oder bevorzugt ein "Modified Prony"-Verfahren nach Osborne und Smyth (Osborne M.R., Smyth G.K.; "A Modified Prony Algorithm for Fitting Functions Defined by Difference Equations", SIAM Journal on Scientific and Statistical Computing, Band 12 (1991), Seiten 362 - 382), eingesetzt werden, das die Parameter $b_k$ und $c_k$ so lange iterierend variiert, bis das Minimum eines Abstandsmaßes

$$M\left(P_{R,d,\mathrm{mod}}\left(t\right) - P_{R,d}\left(t\right)\right) \qquad (13)$$

aufgefunden ist, wobei M ein beliebiges Maß für die Abweichung zweier Funktionen voneinander ist, beispielsweise Mean-Square-Error, L1- oder L2-Norm, usw.

Am Ende dieser Kalibrierungsphase sind die optimalen Parameter $b_k$ und $c_k$ des Direktempfangsimpulsmodells $P_{R,d,mod}(t)$ bestimmt, und diese optimalen Parameter $b_k$ und $c_k$ werden nun als konstituierende Parameter des für den Sendeimpuls $P_S(t)$ gewünschten Direktempfangsimpulses $P_{R,d}(t)$ von Gleichung (4) betrachtet und weiterverwendet.

In Kenntnis der Parameter $b_k$ und $c_k$, seien sie vorgegeben oder in einer Kalibrierungsphase wie soeben erläutert gemessen, wird nun die Gleichung (10) bzw. (12) in Hinblick auf den gesuchten Empfangszeitpunkt $t_1$ des von der Wasseroberfläche 8 reflektierten Sendeimpulses $P_S$ gelöst. Dies kann wiederum durch ein iteratives Optimierungs- bzw. Minimierungsverfahren bewerkstelligt werden. Fig. 7 veranschaulicht diesen Schritt.

In diesem Schritt wird der vom Empfänger 6 des Entfernungsmessers bzw. -scanners 1 gemessene Empfangsimpuls $P_R(t)$ mit einem Empfangsimpulsmodell gemäß der (hier nochmals wiedergegebenen) Gleichung (5)

$$P_{R,\mathrm{mod}}\left(t\right) = s_s \sum_{k=1}^{p} c_k e^{b_k(t-t_1)} + s_v \sum_{k=1}^{p} \frac{c_k}{a+b_k}\left(e^{b_k(t-t_1)} - e^{-a(t-t_1)}\right) \qquad (5)$$

bzw. bei Berücksichtigung der Bodenreflexionen am Ort $x_2$ gemäß den Gleichungen 5 und 7:

$$P_{R,\mathrm{mod}}\left(t\right) = s_s \sum_{k=1}^{p} c_k e^{b_k(t-t_1)} + s_v \sum_{k=1}^{p} \frac{c_k}{a+b_k}\left(e^{b_k(t-t_1)} - e^{-a(t-t_1)}\right)$$

$$- s_v \sum_{k=1}^{p} \frac{c_k}{a+b_k}\left(e^{b_k(t-t_2)} - e^{-a(t-t_2)}\right) + s_g \sum_{k=1}^{p} c_k e^{b_k(t-t_2)} \qquad (5 + 7)$$

verglichen, in welchem die Parameter $s_s$, $s_v$, a und $t_1$ (bzw. optional auch $sg$ und $t_2$) solange iterierend variiert werden, bis das Maß

$$M\left(P_{R,\mathrm{mod}}\left(t\right) - P_R\left(t\right)\right) \qquad (14)$$

minimal ist, wobei M ein beliebiges Maß für die Abweichung zweier Funktionen voneinander ist, beispielsweise Mean-Square-Error, L1- oder L2-Norm, usw. Dann sind die optimalen Parameter des Empfangsimpulsmodells $P_{R,mod}(t)$ aufgefunden, von denen insbesondere der Empfangszeitpunkt $t_1$ interessiert, um die Entfernung d des Entfernungsmessers bzw. -scanners 1 vom Messpunkt $x_1$ der Wasseroberfläche 8 zu bestimmen. Die weiteren dabei aufgefundenen Parameter $s_s$, $s_r$, $s_g$ und, a stellen ebenfalls ein nützliches Nebenprodukt des Verfahrens dar.

Für die genannte Minimierungsaufgabe kann ein Gradientenverfahren eingesetzt werden, indem die vier bzw. sechs zu optimierenden Parameter als Dimensionen eines fünf- bzw. siebendimensionalen Raums aufgefasst werden, in welchem die zu minimierende Zielfunktion $M(P_{R,mod}(t) - P_R(t))$ eine vier- bzw. sechsdimensionale Fläche darstellt, auf der in jedem Iterationsschritt z.B. größtmöglich abwärtsgeschritten wird, um das Minimum zu suchen.

Als Startwerte für das Minimierungsverfahren können gute Schätzungen für die wasserspezifischen Parameter $s_s$, $s_v$ und a und den Parameter $s_g$ des Wasserbodens verwendet werden. Ferner können Startwerte für die gesuchten Parameter $t_1$ und $t_2$ aus groben Vorab-Messungen ermittelt werden, beispielsweise mittels eines herkömmlichen Impulslaufzeitmessverfahrens.

Das vorgestellte Verfahren eignet sich besonders zur Echtzeit-Abarbeitung in einer Auswerteelektronik des Laserentfernungsmessers bzw. -scanners 1, welche für jeden ausgesandten Impuls $P_S$ sofort ("online") einen entsprechenden Entfernungsmesswert *d* ermittelt, um in rascher Folge eine Vielzahl von Messpunkten $x_1$ der Wasseroberfläche 8 und/oder $x_2$ des Wasserbodens 10 zu ermitteln. Das Verfahren kann dabei sowohl mittels dedizierter Hardware-Rechenmitteln als auch mittels entsprechender Softwaremodule ausgeführt werden.

Die Erfindung ist nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zur Messung der Entfernung von einem Messort zu einer Oberfläche eines Wasservolumens, umfassend:

Aussenden eines Lichtimpulses $P_S$ mit einem zeitlichen Verlauf $P_s(t)$, der am Ausgang eines ohne Reflexion am Wasservolumen angestrahlten Empfängers einen Direktempfangsimpuls $P_{R,d}$ mit dem zeitlichen Verlauf

$$P_{R,d}(t) = \sum^{p} \sigma(t - t_0) c_k e^{b_k t}$$

mit $b_k$, $c_k$ Parameter der *k-ten* Exponentialfunktion von p Exponentialfunktionen, hervorruft, vom Messort aus zu einem Sendezeitpunkt $t_0$ auf die Wasseroberfläche, wobei $\sigma(t)$ die Stufenfunktion bezeichnet;

Empfangen eines reflektierten Lichtimpulses am Messort in einem Empfänger und Aufzeichnen des zeitlichen Verlaufs $P_R(t)$ des Empfängerausgangssignals;

Optimieren der Parameter $s_s$, $s_v$, a und $t_1$ eines Empfangsimpulsmodells $P_{R,mod}(t)$ der Gleichung

$$P_{R,\text{mod}}(t) = s_s \sum_{k=1}^{p} c_k e^{b_k(t-t_1)} + s_v \sum_{k=1}^{p} \frac{c_k}{a + b_k} \left( e^{b_k(t-t_1)} - e^{-a(t-t_1)} \right)$$

mit $t_1$ Empfangszeitpunkt des von der Wasseroberfläche reflektierten Lichtimpulses im Empfänger,
$s_s$ Reflexionsvermögen der Wasseroberfläche,
$s_v$ Reflexionsvermögen des Wasservolumens,
a Absorptionsvermögen des Wasservolumens,

bis die Abweichung zwischen Empfangsimpulsmodell $P_{R,mod}(t)$ und aufgezeichnetem Verlauf $P_R(t)$ minimal ist; und

Bestimmen der Entfernung vom Messort zur Wasseroberfläche aus dem optimierten Parameter $t_1$ und dem Sendezeitpunkt $t_0$.

2. Verfahren nach Anspruch 1, umfassend, vor den genannten Schritten, die folgenden Schritte:

Senden eines Lichtimpulses $P_S$ vom Messort ohne Reflexion am Wasservolumen zum Empfänger und Aufzeichnen des zeitlichen Verlaufs $P_{R,d}(t)$ des dort am Empfängerausgang auftretenden Direktempfangsimpulses $P_{R,d}$; und

Optimieren der Parameter $b_k$ und $c_k$ eines Direktempfangsimpulsmodells

$$P_{R,d,\text{mod}}(t) = \sum^{p} \sigma(t) c_k e^{b_k t} \, ,$$

bis die Abweichung zwischen Direktempfangsimpulsmodell $P_{R,d,mod}(t)$ und aufgezeichnetem Verlauf $P_{R,d}(t)$ minimal ist.

3. Verfahren nach einem der Ansprüche 1 bis 2, **dadurch gekennzeichnet, dass** *p* = 5 bis 9, bevorzugt *p* = 7, gewählt wird.

4. Verfahren nach einem der Ansprüche 1 bis 3, **dadurch gekennzeichnet, dass** für den Schritt des Optimierens des Empfangsimpulsmodells $P_{R,mod}(t)$ ein Startwert für den Parameter $t_1$ gewählt wird, der aus einem früheren Messwert der Entfernung des Messorts zur Wasseroberfläche bestimmt wird.

**5.** Verfahren nach einem der Ansprüche 1 bis 4, **dadurch gekennzeichnet, dass** für den Schritt des Optimierens des Empfangsimpulsmodells $P_{R,mod}(t)$ Startwerte für die Parameter $s_s$, $s_v$ und a entsprechend bekannten Wassereigenschaften gewählt werden.

**6.** Verfahren nach einem der Ansprüche 1 bis 5, **dadurch gekennzeichnet, dass** das Optimieren mit Hilfe eines Gradientenverfahrens erfolgt.

**7.** Verfahren nach einem der Ansprüche 1 bis 6, **dadurch gekennzeichnet, dass** das Empfangsimpulsmodell $P_{R,mod}(t)$ zusätzlich einen additiven Term

$$- s_v \sum_{k=1}^{p} \frac{c_k}{a+b_k} \left( e^{b_k(t-t_2)} - e^{-a(t-t_2)} \right) + s_g \sum_{k=1}^{p} c_k e^{b_k(t-t_2)}$$

mit $t_2$ Empfangszeitpunkt des von einem Boden des Wasservolumens reflektierten Lichtimpulses, $s_g$ Reflexionsvermögen des Bodens,

enthält,
dass beim genannten Optimieren des Empfangsimpulsmodells $P_{R,mod}(t)$ zusätzlich die Parameter $s_g$ und $t_2$ optimiert werden, und
dass aus dem optimierten Parameter $t_2$ und dem Sendezeitpunkt $t_0$ die Entfernung des Messorts zum Boden des Wasservolumens gemessen wird.

**8.** Verfahren nach Anspruch 7, **dadurch gekennzeichnet, dass** für den Schritt des Optimierens des Empfangsimpulsmodells $P_{R,mod}(t)$ ein Startwert für den Parameter $t_2$ gewählt wird, der aus einem früheren Messwert der Entfernung des Messorts zum Wasserboden bestimmt wird.

**9.** Verfahren nach Anspruch 7 oder 8, **dadurch gekennzeichnet, dass** für den Schritt des Optimierens des Empfangsimpulsmodells $P_{R,mod}(t)$ ein Startwert für den Parameter $s_g$ entsprechend bekannten Bodeneigenschaften gewählt wird.

**Claims**

**1.** Method for measuring the distance from a point of measurement to a surface of a water volume, comprising:

emitting a light pulse $P_S$ with a temporal progression $P_S(t)$, which causes, at the exit of a receiver stricken without reflection at the water volume, a direct receive pulse $P_{R,d}$ with the temporal progression

$$P_{R,d}(t) = \sum_{k=1}^{p} \sigma(t-t_0) c_k e^{b_k t}$$

with $b_k$, $c_k$ being parameters of the k-th exponential function of p exponential functions,
from the point of measurement at a sending instant $t_0$ onto the water surface, wherein $\sigma(t)$ denotes the step function;
receiving a reflected light pulse at the point of measurement in a receiver and recording the temporal progression $P_R(t)$ of the receiver exit signal;
optimising the parameters $s_s$, $s_v$, a and $t_1$ of a receive pulse model $P_{R,mod}(t)$ of the equation

$$P_{R,mod}(t) = s_s \sum_{k=1}^{p} c_k e^{b_k(t-t_1)} + s_v \sum_{k=1}^{p} \frac{c_k}{a+b_k} \left( e^{b_k(t-t_1)} - e^{-a(t-t_1)} \right)$$

with $t_1$ being the receive instant of the light pulse reflected by the water surface in the receiver,
$s_s$ being the reflectivity of the water surface,
$s_v$ being the reflectivity of the water volume,
a being the absorptivity of the water volume, until the deviation between the receive pulse model $P_{R,mod}(t)$

and the recorded progression $P_R(t)$ is minimal; and

determining the distance from the point of measurement to the water surface from the optimised parameter $t_1$ and the sending instant $t_0$.

**2.** Method according to claim 1, comprising, before said steps, the following steps:

emitting a light pulse $P_S$ from the point of measurement without reflection at the water volume to the receiver and recording the temporal progression $P_{R,d}(t)$ of the direct receive pulse $P_{R,d}$ occurring there at the receiver exit; and
optimising the parameters $b_k$ and $c_k$ of a direct receive pulse model

$$P_{R,d,\mathrm{mod}}(t) = \sum_{k=1}^{p} \sigma(t) c_k e^{b_k t}$$

until the deviation between the direct receive pulse model $P_{R,d,mod}(t)$ and the recorded progression $P_{R,d}(t)$ is minimal.

**3.** Method according to any one of the claims 1 to 2, **characterised in that** $p$ = 5 to 9, preferably $p$ = 7, is chosen.

**4.** Method according to any one of the claims 1 to 3, **characterised in that** for the step of optimising the receive pulse model $P_{R,mod}(t)$ a start value is chosen for the parameter $t_1$, which is determined from a prior measurement of the distance of the point of measurement to the water surface.

**5.** Method according to any one of the claims 1 to 4, **characterised in that** for the step of optimising the receive pulse model $P_{R,mod}(t)$ start values are chosen for the parameters $s_s$, $s_v$ and a according to known water properties.

**6.** Method according to any one of the claims 1 to 5, **characterised in that** the optimising is performed by means of a gradient method.

**7.** Method according to any one of the claims 1 to 6, **characterised in that** the receive pulse model $P_{R,mod}(t)$ furthermore includes an additive term

$$-s_v \sum_{k=1}^{p} \frac{c_k}{a+b_k} \left( e^{b_k(t-t_2)} - e^{-a(t-t_2)} \right) + s_g \sum_{k=1}^{p} c_k e^{b_k(t-t_2)}$$

with $t_2$ being the receive instant of the light pulse reflected at a ground of the water volume,
$s_g$ being the reflectivity of the ground,

**in that** during said optimising the receive pulse model $P_{R,mod}(t)$ furthermore the parameters $s_g$ and $t_2$ are optimised, and
**in that** from the optimised parameter $t_2$ and the sending instant $t_0$ the distance of the point of measurement to the ground of the water volume is measured.

**8.** Method according to claim 7, **characterised in that** for the step of optimising the receive pulse model $P_{R,mod}(t)$ a starting value for the parameter $t_2$ is chosen, which is determined from a prior measurement of the distance of the point of measurement to the water ground.

**9.** Method according to claim 7 or 8, **characterised in that** for the step of optimising the receive pulse model $P_{R,mod}(t)$ a start value is chosen for the parameter $s_g$ according to known properties of the ground.

**Revendications**

**1.** Procédé de mesure de la distance d'un point de mesure par rapport à une surface d'un volume d'eau, comprenant :

l'émission d'une impulsion de lumière $P_S$ avec un déroulement temporel $P_s(t)$, qui provoque, à la sortie d'un récepteur illuminé sans réflexion sur le volume d'eau, une impulsion de réception directe $P_{R,d}$ avec un déroulement temporel

$$P_{R,d}(t) = \sum_{k=1}^{p} \sigma(t-t_0) c_k e^{b_k t}$$

avec $b_k$, $c_k$, étant paramètres de la $k^{\text{ième}}$ fonction exponentielle de $p$ fonctions exponentielles,
à partir du point de mesure à un instant d'émission $t_0$ sur la surface de l'eau, où $\sigma(t)$ désigne la fonction en escalier ;
la réception d'une impulsion de lumière réfléchie au point de mesure dans un récepteur et le tracé du déroulement temporel $P_R(t)$ du signal de sortie du récepteur ;
l'optimisation des paramètres $s_s$, $s_v$, $a$ et $t_1$ d'un modèle d'impulsion de réception $P_{R,mod}(t)$ selon la relation

$$P_{R,\text{mod}}(t) = s_s \sum_{k=1}^{p} c_k e^{b_k(t-t_1)} + s_v \sum_{k=1}^{p} \frac{c_k}{a+b_k}\left(e^{b_k(t-t_1)} - e^{-a(t-t_1)}\right)$$

avec $t_1$ étant l'instant de réception de l'impulsion de lumière réfléchie par la surface de l'eau dans le récepteur,
$s_s$ étant le pouvoir réfléchissant de la surface d'eau,
$s_v$ étant le pouvoir réfléchissant du volume d'eau,
$a$ étant le pouvoir d'absorption du volume d'eau, jusqu'à ce que la différence entre le modèle d'impulsion de réception $P_{R,mod}(t)$ et le déroulement tracé $P_R(t)$ soit minimale ; et

la détermination de la distance entre le point de mesure et la surface d'eau à partir du paramètre $t_1$ optimisé et l'instant d'émission $t_0$.

2. Procédé selon la revendication 1, comprenant, avant lesdites étapes, les étapes suivantes :

l'émission d'une impulsion de lumière $P_S$ du point de mesure sans réflexion sur le volume d'eau au récepteur et le tracé du déroulement temporel $P_{R,d}(t)$ de l'impulsion de réception directe $P_{R,d}$ ayant lieu à la sortie du récepteur, et
l'optimisation des paramètres $b_k$ et $c_k$ d'un modèle d'impulsion de réception directe

$$P_{R,d,\text{mod}}(t) = \sum_{k=1}^{p} \sigma(t) c_k e^{b_k t}$$

jusqu'à ce que la différence entre le modèle d'impulsion de réception directe $P_{R,d,mod}(t)$ et le déroulement tracé $P_{R,d}(t)$ soit minimale.

3. Procédé selon l'une des revendications 1 à 2, **caractérisé en ce que** $p$ = 5 à 9, de préférence $p$ = 7, est choisi.

4. Procédé selon l'une des revendications 1 à 3, **caractérisé en ce que**, pour l'étape d'optimisation du modèle d'impulsion de réception $P_{R,mod}(t)$ une valeur de départ est choisie pour le paramètre $t_1$, qui est déterminée à partir d'une valeur de mesure antérieure de la distance entre le point de mesure et la surface de l'eau.

5. Procédé selon l'une des revendications 1 à 4, **caractérisé en ce que**, pour l'étape de l'optimisation du modèle d'impulsion de réception $P_{R,mod}(t)$ des valeurs de départ sont choisies pour les paramètres $s_s$, $s_v$ et $a$ correspondant à des propriétés de l'eau connues.

6. Procédé selon l'une des revendications 1 à 5, **caractérisé en ce que** l'optimisation s'effectue à l'aide d'un procédé par gradients.

7. Procédé selon l'une des revendications 1 à 6, **caractérisé en ce que** le modèle d'impulsion de réception $P_{R,mod}(t)$ contient en plus un terme additif

$$-s_v \sum_{k=1}^{p} \frac{c_k}{a+b_k}\left(e^{b_k(t-t_2)} - e^{-a(t-t_2)}\right) + s_g \sum_{k=1}^{p} c_k e^{b_k(t-t_2)}$$

avec $t_2$ étant l'instant de réception de l'impulsion de lumière réfléchie par un fond du volume d'eau,
$s_g$ étant le pouvoir réfléchissant du fond,

que dans ladite optimisation du modèle d'impulsion de réception $P_{R,mod}(t)$ les paramètres $s_g$ et $t_2$ sont en plus optimisés, et
qu'à partir du paramètre $t_2$ optimisé et de l'instant d'émission $t_0$, la distance du point de mesure jusqu'au fond du volume d'eau est mesurée.

8. Procédé selon la revendication 7, **caractérisé en ce que**, pour l'étape de l'optimisation du modèle d'impulsion de réception $P_{R,mod}(t)$, une valeur de départ pour le paramètre $t_2$ est choisie, qui est déterminée à partir d'une valeur de mesure antérieure de la distance du point de mesure jusqu'au fond de l'eau.

9. Procédé selon la revendication 7 ou 8, **caractérisé en ce que**, pour l'étape d'optimisation du modèle d'impulsion de réception $P_{R,mod}(t)$, une valeur de départ est choisie pour le paramètre $s_g$ correspondant à des propriétés du fond connues.

## Fig. 1

## Fig. 2

**Fig. 3**

**Fig. 4**

**Fig. 5**

$P_S(t)$

$P_{R,d}(t)$

$P_{R,d,mod}(t)$

*Fig. 6*

$P_S(t)$

$t_0$

$P_R(t)$

$P_{R,mod}(t)$

$t_1$         $t_2$

*Fig. 7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **TULLDAHL M. ; ANDERSSON M. ; STEINVALL O.** Airborne Laser Depth Sounding: Improvements in Position- and Depth Estimates by Local Corrections for Sea Surface Slope. *OCEANS 2000 MTS/IEEE Conference and Exhibition,* vol. 2, 1421-1428

- **WONG H. ; ANTONIOU A.** Characterization and Decomposition of Waveforms for LARSEN 500 Airborne System. *IEEE Transactions on Geoscience and Remote Sensing,* November 1991, vol. 29 (6), 912-921
- **OSBORNE M.R. ; SMYTH G.K.** A Modified Prony Algorithm for Fitting Functions Defined by Difference Equations. *SIAM Journal on Scientific and Statistical Computing,* 1991, vol. 12, 362-382